# EUROPEAN PATENT APPLICATION

(11) **EP 3 858 734 A1**
(43) Date of publication of application: **04.08.2021**
(21) Application number: 19854128.6
(22) Date of filing: 28.08.2019
(51) Int. Cl.: B64D 11/02

(54) **ILLUMINATION SYSTEM AND AIRCRAFT LAVATORY UNIT**

(30) Priority: 29.08.2018 JP 2018159884
(71) Applicant: The Yokohama Rubber Co., Ltd., Tokyo 105-8685 (JP)
(72) Inventor: MURAYAMA, Hiroshi, Hiratsuka-shi, Kanagawa 254-8601 (JP)
(74) Representative: Dilg, Haeusler, Schindelmann Patentanwaltsgesellschaft mbH
(86) International application number: PCT/JP2019/033726
(87) International publication number: WO 2020/045502

(57) **Abstract**

An illumination system (10) illuminates a periphery of a mirror (20) that reflects a face of a user (U), in order to perform lighting suitable for individual users at a location visited by many unspecified users. A light (100) is provided around the mirror (20). Sensors (101) include, for example, a camera (102), an infrared sensor (104), and the like, and detect information on the face of the user (U) located around the mirror (20). A light control unit (110) controls the lighting state of the light (100) based on a detection result of the information on the face by the sensors (101).

## Description

### Technical Field

The present invention relates to an illumination system for illuminating the periphery of a mirror that reflects a face of a user, and an aircraft lavatory unit provided with the illumination system.

### Background Art

In the related art, an illumination is provided at a location where a mirror is installed, such as a lavatory, to illuminate a user reflected in the mirror and to enhance visibility.

For example, Patent Document 1 discloses a toilet system including: a toilet device that includes a toilet bowl, a toilet seat provided on the toilet bowl, and a first illumination, the toilet device provided in a toilet room; a human body detection sensor that senses a human body in the toilet room; a remote control for operating the toilet device; a mirror that is provided on a side wall in the toilet room, the mirror including a second illumination; a cabinet that includes a third illumination for illuminating downward, the cabinet provided below the mirror in the toilet room, the cabinet separated from a floor surface of the toilet room; and a control unit that controls the first illumination, the second illumination, and the third illumination. The control unit turns on the first illumination and the second illumination after the entrance detection sensor has sensed a human body and turns on the third illumination after turning on the first illumination and the second illumination.

### Citation List

### Patent Document

Patent Document 1: JP 2017-169901 A

### Summary of Invention

### Technical Problem

For such illumination on the periphery of a mirror, dimming parameters such as color temperature, brightness, and color rendering index (CRI) are defined according to a client's preference. These dimming parameters are not assumed to be changed for each use and are basically handled as fixed values.

On the other hand, because many people utilize a lavatory in a commercial facility, an aircraft, or the like, the lighting conditions to individual users (users of a mirror) differ. Because the user's own look reflected in the mirror considerably affects his or her mind, it is preferable to perform lighting (dimming) suitable for individual users.

The present invention has been made in view of such circumstances, and an object of the present invention is to perform lighting suitable for individual users at a location visited by many unspecified users.

### Solution to Problem

To achieve the object described above, the present invention provides an illumination system for illuminating a periphery of a mirror that reflects a face of a user, the illumination system including: a light provided on the periphery of the mirror; a sensor that detects information on the face of the user located on the periphery of the mirror; and a light control unit that controls a lighting state of the light based on a detection result of the information on the face by the sensor.

### Advantageous Effects of Invention

According to the present invention, the lighting state of the light is controlled based on the information on the face of the user, and therefore, lighting suitable for individual users can be performed, and the convenience when using the mirror can be improved.

### Brief Description of Drawings

FIG. 1 is a block diagram illustrating a configuration of an illumination system according to an embodiment.
FIG. 2 is a diagram illustrating examples of the placement of lights on a periphery of a mirror.
FIG. 3 is an explanatory diagram illustrating a position at which a camera is disposed.
FIG. 4 is an explanatory diagram schematically illustrating positions of parts of a face of a user.

### Description of Embodiments

An illumination system according to an embodiment of the present invention will be described in detail below with reference to the accompanying drawings.

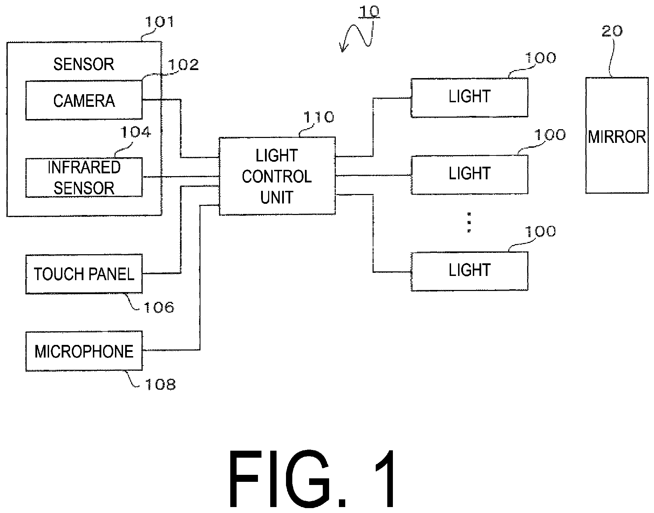

FIG. 1 is a block diagram illustrating a configuration of an illumination system 10 according to an embodiment.

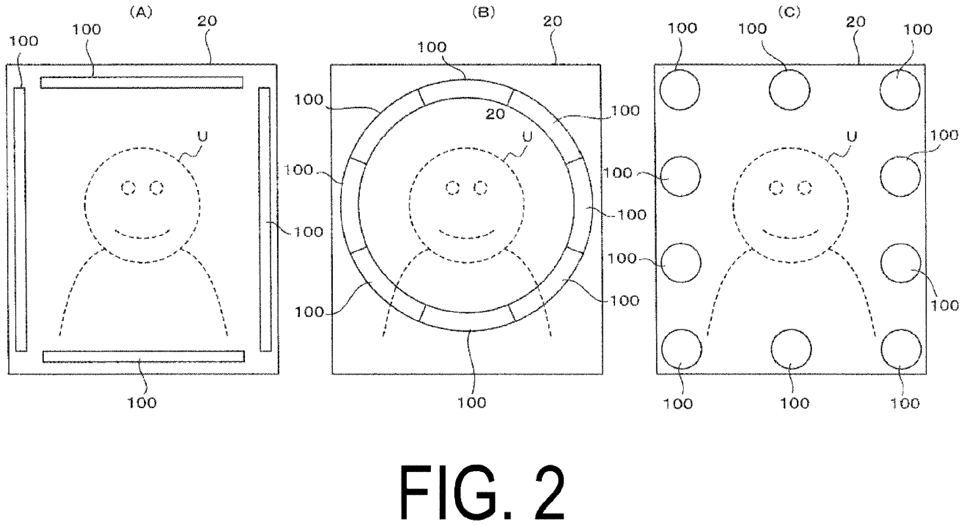

The illumination system 10 according to an embodiment is a system for illuminating a periphery of a mirror 20 that reflects a face of a user U. The mirror 20 is provided in, for example, a hand washing place and a space for reapplying makeup in a lavatory, an aircraft lavatory unit described below, and the like. In the present embodiment, the mirror 20 is sized to reflect the face to the upper half of the user U when the user U comes to a normal mirror use position (e.g., in front of a hand washing sink in a case where the mirror 20 is provided in a hand washing place), as illustrated in FIG. 2, for example.

The illumination system 10 includes a light 100, sensors 101 (a camera 102 and an infrared sensor 104), a touch panel 106, a microphone 108, and a light control unit 110.

The light 100 is, for example, an LED lamp and is provided around the mirror 20. In the present embodiment, a plurality of lights 100 are provided around the mirror 20. The lights 100 can be changed in at least any of the color temperature, the brightness (amount of light), the color rendering index, the lighting position, or the illumination direction (hereinafter referred to as "dimming parameters"). In other words, the plurality of lights 100 are provided, and the light control unit 110, which will be described later, controls the lighting state of each of the plurality of lights 100 based on detection results of the sensors 101 described below.

FIGS. 2A to 2C illustrate examples of the placement of the lights 100 around the mirror 20.

In FIG. 2A, four line-shaped lights 100 are provided along each side of the mirror 20 having a rectangular shape, and the lights 100 can be each individually switched between on and off and can be changed in dimming parameters. Furthermore, in a case where the line-shaped lights 100 are each a package of point light sources disposed on a straight line, it is possible to divide the straight line into a plurality of regions and to switch the lights between on and off and change the dimming parameters for each of the regions.

In FIG. 2B, the lights 100 are disposed in a circular ring around the face of the user U. In the illustrated example, a circular ring section is divided into eight parts (top, upper right, right, lower right, bottom, lower left, left, and upper left), and the lights 100 constituting the respective parts of the circular ring section can be individually switched between on and off and changed in the dimming parameters.

In the example of FIG. 2C, the lights 100 of a bulb type are disposed at predetermined intervals near each side of the rectangular mirror 20. The lights 100 can be each individually switched between on and off and changed in the dimming parameters.

In the examples illustrated in FIGS. 2A to 2C, the lights 100 are superposed on the mirror 20. However, of course, the lights 100 may be disposed in positions where they are not superposed on the mirror 20 (a wall surface around the mirror 20, a ceiling, or the like). Furthermore, a pan or tilt function may be provided in the respective lights 100, and the illumination direction can be controlled.

Returning to the description of FIG. 1, the sensors 101 detect information on the face of the user U located around the mirror 20. In the present embodiment, the camera 102 and the infrared sensor 104 are provided as the sensors 101.

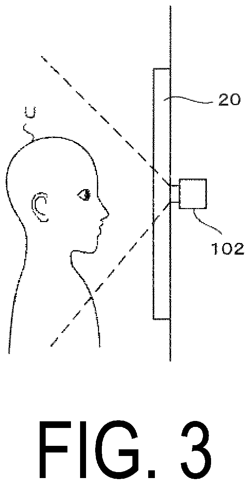

The camera 102 captures an image including the face of the user U using the mirror 20. The camera 102 is disposed on the rear surface side of the mirror 20, for example, as illustrated in FIG. 3. More specifically, for example, the mirror 20 is a half mirror, and the light transmitted to the rear surface side is captured by the camera 102. In addition, in a case where the mirror 20 is a total reflection mirror, a notch may be provided which exposes a lens of the camera 102 from the rear surface side of the mirror 20, and an image may be captured from the notch portion. In this case, a notch, if present in the center of the mirror 20, may give an unpleasant sensation to the user U. Thus, for example, a notch may be provided on the upper side (or lower side) of the mirror 20, and an image may be captured from this position.

By using the camera 102 as the sensor 101, a skin color of the face of the user U, a number of wrinkles in the face of the user U, a position of the face of the user U, positions of the parts of the face of the user U, and the like can be detected. Note that the means for detecting these pieces of information is not limited to the camera 102, and various known sensors can be used.

The infrared sensor 104 detects the distance between the mirror 20 and the user U, i.e., the position of the user U (in particular, the position in the depth direction). Furthermore, as will be described below, the infrared sensor 104 may be used as a temperature sensor to detect the position of the face of the user U, and the like.

The touch panel (operation unit) 106 receives adjustment of the lighting state of the lights 100 from the user U. As described above, the adjustment of the lighting state of the lights 100 is, for example, switching the lights 100 between on and off, adjusting the dimming parameters, and the like.

Also, for example, a set of dimming parameters may be set in advance along a predetermined theme (e.g., morning sun, nightfall, romantic, sunshine in Hawaii, etc.), and the user U can set the dimming parameters by selecting any theme via the touch panel 106.

A smart mirror may be used as the mirror 20, and the touch panel 106 may be displayed on the surface of the mirror 20.

The microphone 108 collects the speech of the user U. In the present embodiment, the microphone 108 receives the adjustment of the lighting state of the lights 100 by voice from the user U. The user U can adjust the lighting state of the lights 100 by uttering words to specifically adjust the lighting state, such as "slightly brighter", or uttering an image word associated with a set of dimming parameters, such as "Hawaii."

In addition, by analyzing the voice of the user U that has been collected by the microphone 108, it is possible to estimate attributes of the user U (residence (nationality), gender, age, and the like). Based on such attributes, dimming parameters suitable for the user U can be selected, and the control in the light control unit 110 can be performed with higher accuracy.

In particular, when the illumination system 10 is applied to an aircraft lavatory unit, the microphone 108 is preferably installed in place of the touch panel 106 or together with the touch panel 106 to enable touchless operation. This is because there is a very high need for the aircraft lavatory unit to be hygienic.

In addition, a speaker may be provided together with the microphone 108 to allow interactive input and/or confirmation of the contents of voice input.

The light control unit 110 controls the lighting state of the lights 100 based on the detection result of the information on the face of the user U by the sensors 101.

The light control unit 110 controls the lighting state of the lights 100 for improving an aesthetic appearance of the face of the user U reflected in the mirror 20, for example. In this embodiment, improving the aesthetic appearance refers to giving a healthier and younger look, for example.

Note that when the adjustment of the lighting state of the lights 100 is received from the user U via the touch panel 106, the lighting state of the lights 100 is not automatically controlled by the light control unit 110, but is preferably controlled along the contents of the adjustment by the user U.

In a case where the skin color of the face of the user U is detected by the sensors 101, the light control unit 110 adjusts the color temperature of the lights 100 based on the skin color of the user U. For example, if the skin color of the user U is thin (close to white), the color temperature of the lights 100 is adjusted to be low (in a warm color system). In addition, when the skin color of the user U is thick, the color temperature of the lights 100 is adjusted to be high (in a cold color system).

In addition, in a case where the sensors 101 are used to detect the number of wrinkles in the face of the user U, the light control unit 110 adjusts the lighting position of the lights 100 based on the number of wrinkles. For example, in a case where the number of wrinkles is large, light from a lower direction with respect to the face of the user U is increased in order to make the shadow of the wrinkles less visible.

In addition, in a case where the position of the face of the user U is detected by the sensors 101, the light control unit 110 adjusts the amount of light from the lights 100 based on the position of the face of the user U (distance in the depth direction from the mirror 20). For example, when the user U approaches the mirror 20 after starting to use the mirror 20, the amount of light is increased due to the possibility that the amount of light may be insufficient. Additionally, when the user U moves away from the mirror 20, the amount of light is decreased because the user U may feel dazzling due to strong light.

The light control unit 110 may also be configured to adjust the lighting position of the lights 100 based on, for example, the position of the face of the user U reflected in the mirror 20. That is, the position (position in the vertical direction) of the face of the user U reflected in the mirror 20 varies depending on the height of the user U. In particular, in a case where the lights 100 are provided along the upper and lower sides of the mirror 20, the face of a user U who is particularly taller than the standard or a shorter user U such as a child may overlap with the position of the light 100, which may cause disadvantages. In this case, the light control unit 110 turns off the light 100 located at the position where it overlaps with the face of the user U and prevents the use of the mirror 20 from being hindered.

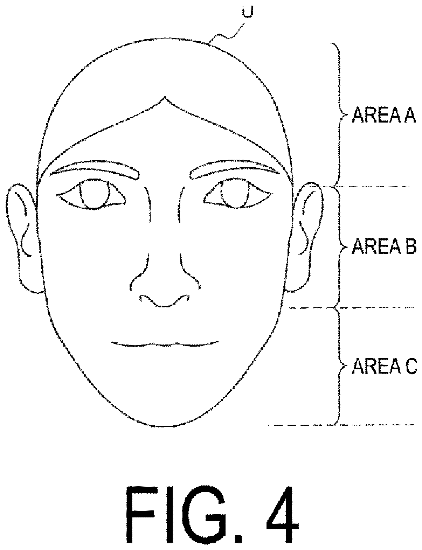

In addition, in a case where the sensors 101 detect positions of parts of the face of the user U, the light control unit 110 changes the color temperature of the light at a position corresponding to each of the parts based on the positions of the parts of the face. For example, as illustrated in FIG. 4, the face of the user U is divided into areas in the vertical direction, and the area from the forehead to the eyes is defined as area A, the area including the nose and the cheek is defined as area B, and the area from the mouth to the chin is defined as area C. Light having a color temperature corresponding to white to yellow is applied to the area A, light having a color temperature corresponding to red is applied to the area B, and light having a color temperature corresponding to blue, green, or gray is applied to the area C, respectively.

Thus, the complexion can be made to look more florid and healthy.

In the illumination system 10 according to the embodiment, the lighting state of the lights 100 is controlled based on the information on the face of the user U, and therefore, lighting suitable for the individual users U can be performed, and the convenience when using the mirror can be improved, as described above.

The illumination system 10 also controls the lighting state of the lights 100 to improve the aesthetic appearance of the face of the user U reflected in the mirror 20, which is advantageous in improving the psychological condition of the user U when using the mirror 20.

In addition, in the illumination system 10, adjusting the color temperature of the lights 100 based on the skin color of the user U is advantageous in making the skin color of the user U look healthy.

In addition, in the illumination system 10, adjusting the lighting position of the lights 100 based on the number of wrinkles in the face of the user U is advantageous in making the wrinkles of the face of the user U reflected in the mirror 20 inconspicuous and providing younger-looking.

In addition, in the illumination system 10, adjusting the amount of light from the lights 100 based on the position of the face of the user U is advantageous in improving the visibility of the face reflected in the mirror 20.

In addition, in the illumination system 10, changing the color temperature of the light 100 at a position corresponding to each of the parts based on the positions of the parts of the face of the user U is advantageous in improving the complexion of the face of the user U reflected in the mirror 20 and providing a healthier look.

### Examples

A case where the illumination system 10 according to an embodiment of the present invention is applied to an aircraft lavatory unit will now be described.

The aircraft lavatory unit includes a toilet bowl, a hand washing sink, and the like housed in a slightly larger area than a normal toilet stall. The mirror 20 in the aircraft lavatory unit is typically provided on a wall surface adjacent to the hand washing sink.

The aircraft lavatory unit has a relatively small area, and the distance between the mirror 20 and the user U is small. Thus, it is possible to adjust the lighting state with higher accuracy.

In addition, since seating is basically demanded in an aircraft, the user U may feel fatigue, particularly on long flights. In such a state, when the user U looks in the mirror under illumination which makes the user U's own skin color look bad, the user U may become disappointed as a result, and fatigue may further increase. Performing lighting suitable for the individual users U by the illumination system 10 is advantageous in refreshing the feeling of the user U and reducing fatigue.

Because a toilet bowl is provided in the aircraft lavatory unit as described above, it may not be appropriate to provide the camera 102 as the sensor 101, for example. In this case, the position and temperature distribution of the body of the user U may be detected using a temperature sensor such as the infrared sensor 104, and the position of the face of the user U may be identified based on this. That is, the temperature sensor may be used as the sensor 101, and the position of the face of the user U may be detected by sensing the body temperature of the user U with the temperature sensor.

Furthermore, as the sensor 101, a door switch for sensing a locked state of the door of the aircraft lavatory unit may be provided. In this case, the illumination system 10 is activated while the locked state of the door (the lavatory being occupied) is sensed by, for example, a door switch, and the light 100 is turned on. In a case where an unlocked state of the door is sensed by the door switch, the illumination system 10 goes into a sleep state, and the light 100 is turned off.

Furthermore, a specific feature of an aircraft is that the aircraft moves between a departure place and an arrival place, and that the user U is placed in different environments before and after boarding the airplane.

Thus, the light control unit 110 may control the lighting state of the lights 100 based on information on at least one of the arrival place or the departure place of the aircraft, along with the detection result of the information on the face of the user U.

In other words, for example, the light control unit 110 controls the lights 100 with the dimming parameters based on a conception of the current time of the arrival place (or the time of arrival at the arrival place). Thus, the user U can intuitively grasp the current time at the arrival place and mitigate jet lag or the like. Further, for example, the dimming parameters based on a conception of the departure place and the dimming parameters based on a conception of the arrival place may be switched at predetermined intervals, and the user U may compare the difference.

Such a dimming method is applicable not only to the aircraft lavatory unit, but also to various locations such as a lavatory in an airport.

Thus, applying the illumination system 10 according to an embodiment of the present invention to the aircraft lavatory unit is advantageous in improving the convenience of the aircraft lavatory unit.

### Reference Signs List

10: Illumination system
20: Mirror
100: Light
101: Sensors
102: Camera
104: Infrared sensor
106: Touch panel
108: Microphone
110: Light control unit

## Claims

1. An illumination system for illuminating a periphery of a mirror that reflects a face of a user, the illumination system comprising:
a light provided on the periphery of the mirror;
a sensor that detects information on the face of the user located on the periphery of the mirror; and
a light control unit that controls a lighting state of the light based on a detection result of the information on the face by the sensor.

2. The illumination system according to claim 1, wherein the light control unit controls the lighting state of the light to improve an aesthetic appearance of the face of the user reflected in the mirror.

3. The illumination system according to claim 1 or 2, wherein
the sensor detects a skin color of the face of the user, and
the light control unit adjusts a color temperature of the light based on the skin color.

4. The illumination system according to claim 1 or 2, wherein
the sensor detects a number of wrinkles in the face of the user, and
the light control unit adjusts a lighting position of the light based on the number of wrinkles.

5. The illumination system according to claim 1 or 2, wherein
the sensor detects a position of the face of the user, and
the light control unit adjusts an amount of light from the light based on the position of the face.

6. The illumination system according to claim 1 or 2, wherein
the sensor detects a position of a part of the face of the user, and
the light control unit changes a color temperature of the light at a position corresponding to each part based on the position of the part of the face.

7. The illumination system according to any one of claims 1 to 6, wherein
a plurality of the lights are provided, and
the light control unit controls the lighting state of each of the plurality of lights based on the detection result.

8. An aircraft lavatory unit comprising the illumination system described in any one of claims 1 to 7.

9. The aircraft lavatory unit according to claim 8, wherein the light control unit controls the lighting state of the light based on information on at least one of an arrival place or a departure place of the aircraft, along with the detection result of the information on the face.

10. The aircraft lavatory unit according to claim 8 or 9, wherein
the sensor comprises a temperature sensor, and
a position of the face of the user is detected by sensing a body temperature of the user with the temperature sensor.
